# DEMANDE DE BREVET EUROPEEN

(11) **EP 4 207 889 A1**
(43) Date de publication de la demande: **05.07.2023**
(21) Numéro de dépôt: 22215163.1
(22) Date de dépôt: 20.12.2022
(51) Int. Cl.: H04W 64/00, G01S 5/02

(54) **PROCEDE DE VALIDATION D'UN POSITIONNEMENT D'UN TERMINAL UTILISATEUR DANS UN RESEAU DE CELLULES 5 G**

(30) Priorité: 29.12.2021 FR 2114621
(71) Demandeur: THALES, 92400 Courbevoie (FR)
(72) Inventeur: PANAITOPOL, Dorin, 92622 GENNEVILLIERS CEDEX (FR); DELAVEAU, François, 92622 GENNEVILLIERS CEDEX (FR)
(74) Mandataire: Atout PI Laplace

(57) **Abrégé**

L'invention concerne un système de communication 5G comprenant un réseau radio cellulaire 5G, chaque cellule dudit réseau radio cellulaire 5G comprenant au moins une station de base chaque station de base étant adaptée pour communiquer avec un terminal utilisateur (UE) compatible 5G. Le système de communication comprend un satellite (Sat), ledit satellite (Sat) étant adapté pour échanger des trames de service (T_{S}) avec le terminal utilisateur (UE), une passerelle (GW), ladite passerelle (GW) étant adaptée pour échanger des trames lien feeder (T_{LF}) avec le satellite (Sat), un réseau central 5G (5GC), ledit réseau central (5GC) étant relié à la passerelle (GW), ledit réseau central (5GC) étant apte à communiquer avec les stations de base. Le terminal utilisateur (UE) est apte à communiquer à un instant donné avec plusieurs stations de base, dites stations de base de proximité (gNB1,..., gNBi, ..., gNBn).

## Description

### Domaine technique

La présente invention concerne la mise en oeuvre de communications 5G entre un terminal (dit User Equipement en anglais ou UE) utilisant et un réseau central (dit 5G Core en anglais ou 5GC) via au moins un satellite de communication.

### Technique antérieure

Les systèmes satellites pour les terminaux utilisateurs sont aujourd'hui propriétaires et peu ou pas interopérables ni entre les différents systèmes satellites, ni avec les réseaux mobiles terrestres. Les terminaux utilisateurs et les équipements réseaux existants coutent chers et sont spécifiques. Cela les limite à des marchés de niche et ne leur permet pas de créer une solution pour le marché grand public.

L'organisme de standardisation des réseaux mobiles 3GPP (pour « 3rd Génération Partnership Project » en anglais) tente de répondre à ce problème en proposant des modifications au standard 5G, dit cinquième génération de réseau mobile, pour le rendre compatible d'un point de vue satellite. Des modifications sont alors à prévoir sur l'ensemble des composants du système. Pour cela, une nouvelle version du standard 3GPP est en cours d'élaboration dans la version n°17 (i.e. Release-17 ou Rel-17) pour permettre l'utilisation de la 5G par satellite dans le cadre d'un groupe de travail 3GPP NTN (pour « Non-Terrestrial Networks » en anglais). Cette version prévoit des modifications au niveau des différentes composantes du système de communication. Il est connu qu'un système de communication pour une communication 5G comprend un réseau central et au moins une station de base appartenant à une cellule 5G. Dans un système par satellite, le système de communication comprend également au moins une passerelle disposée entre le satellite et le réseau central. Le système de communication permet ainsi une communication 5G entre des terminaux utilisateurs et ledit réseau central.

Le terminal utilisateur en communication avec le réseau central est présent dans une cellule du réseau de cellules 5G. Afin d'assurer certaines fonctionnalités, comme, par exemple, des fonctionnalités de facturation, il est nécessaire d'avoir une bonne connaissance de la position du terminal utilisateur dans le réseau de cellules 5G, à tout instant.

Il est connu d'utiliser au niveau du terminal utilisateur, les coordonnées d'un système de positionnement par satellites dit coordonnées GNSS pour la Géolocalisation et la Navigation par un Système de Satellites. Par GNSS, on comprend tout système ou combinaison de systèmes de navigation par satellite comme, par exemple, GPS, GALILEO, BEIDOU, GLONASS, EGNOS, NavIC, QZSS (ou Michibiki), etc. Le terminal utilisateur fait ainsi remonter ses coordonnées GNSS vers le réseau central. Le terminal utilisateur utilise également ses coordonnées/informations GNSS pour se synchroniser avec le réseau satellite 5G NTN (dit Non-Terrestrial Networks en anglais ou NTN), par exemple pour réaliser une pré-compensation Doppler et/ou une procédure de Timing Advance.

Cependant, le terminal utilisateur peut facilement modifier de manière trompeuse sa position géographique, c'est-à-dire la mesure effectuée ou le rapport de mesure GNSS envoyé vers le réseau central. Dès lors, un réseau 5G ne peut pas considérer la position GNSS qui lui a été transmise par le terminal utilisateur comme totalement fiable. Ce réseau 5G doit donc avoir un mécanisme de vérification/validation par le réseau. Ce mécanisme de vérification est nécessaire pour connaître la position du terminal utilisateur en vue d'appliquer la bonne politique de routage et le bon tarif. Ce mécanisme est également nécessaire pour permettre des interceptions légales (Lawful Interception en anglais) en vue de pouvoir intercepter le terminal utilisateur par une autorité compétente du pays dans lequel se situe ledit terminal utilisateur. Enfin un tel mécanisme de vérification permet de refuser l'accès par satellite e.g. dans les pays qui ne sont pas desservis par l'opérateur satellite.

Pour réaliser un mécanisme de vérification au niveau du réseau 5G, il est connu d'utiliser des techniques de positionnement classiques, telles que des techniques de positionnement utilisées pour les réseaux terrestres. Il est ainsi possible d'utiliser des signaux de positionnement ou tout autre type de signal pilote. Cependant, le problème est que les cellules satellite sont très grandes et les zones géographiques ne sont pas forcément couvertes par plusieurs cellules à la fois comme dans un réseau radio cellulaire terrestre. Il est également possible d'introduire de nouveaux pilotes (dit Service Link en anglais ou SL), notamment des signaux de référence pour le positionnement (dit Positioning Reference Signals en anglais ou PRS) et les rapports de mesure des terminaux utilisateurs UEs sur les PRS, ou une utilisation de pilotes SRS (dit Sounding Référence Signals) émis par UE vers le satellite et/ou le réseau d'accès satellite. Cependant ces solutions sont difficiles à mettre en oeuvre, surtout s'il y a un seul satellite disponible et/ou une seule cellule NTN qui couvre la zone de desserte. En outre, dans la version n°17 du standard 3GPP, le terminal utilisateur pré-compense le Timing Advance et le Doppler en UpLink et ceci avant et après la première transmission et/ou l'accès initial vers le satellite. Les informations GNSS et des satellites de communication éphémères sont utilisés. Cependant, il n'est pas possible d'utiliser des méthodes classiques de localisation sauf à requérir un niveau de puissance reçu par plusieurs satellites 5G NR (dit « New Radio » en anglais), si plusieurs de ces satellites couvrent la même zone. Enfin, une telle solution ne résout pas les problématiques de validation pour un déploiement géostationnaire avec des cellules/spots d'environ e.g. 300-500 km de largeur au sol. Il existe également d'autres solutions connues pour des communications par satellite, telles que des solutions propriétaires e.g. Iridium avec une implémentation « Earth Moving Cell ». Pour ce type d'implémentation, les beams/les cellules/les spots au sol se déplacent avec le satellite, les terminaux restent relativement peu de temps dans la cellule (surtout dans les constellations de basse altitude avec des satellites qui se déplacent à haute vitesse) et c'est possible d'avoir une estimation de la position du terminal au moment où le terminal sort de la cellule/se connecte à une autre cellule, même si la solution n'est pas très précise. Cependant, dans le cas des satellites LEO/MEO, il est également possible d'utiliser une antenne active sur le satellite pour couvrir une zone unique au sol (« Earth Fixed Cell » contrairement à « Earth Moving Cell »), mais les cellules/spots au sol ont toujours une largeur importante d'environ 50-90 km et la précision du positionnement reste très réduite. Aucune solution n'est pas disponible aujourd'hui pour des technologies 5G NTN de type « Earth Fixed Cell ».

Sont également connus les protocoles LPP et NRPPa. Ces protocoles sont décrits dans différentes versions du standard 3GPP tels que :
- 3GPP TS 23.271 V15.2.0 (2019-12), Functional stage 2 description of Location Services (LCS) (Release 15) ;
- 3GPP TS 23.273 V16.2.0 (2019-12), 5G System (5GS) Location Services (LCS) ; Stage 2 (Release 16) ;
- 3GPP TS 38.305 V15.5.0 (2019-12), Stage 2 functional specification of User Equipment (UE) positioning in NG-RAN (Release 15) ;
- 3GPP TS 38.455 V15.2.1 (2019-01), NR Positioning Protocol A (NRPPa); (Release 15) ;
- 3GPP TR 38.855 V16.0.0 (2019-03), Study on NR positioning support (Release 16) ;
- 3GPP TR 38.856 V16.0.0 (2019-12) Study on local NR positioning in NG-RAN (Release 16).

Ces protocoles LPP et NRPPa sont également décrits dans le TS 37.355 et TS 38.455.

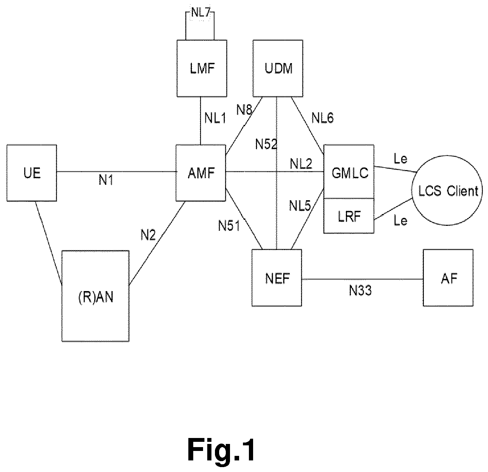

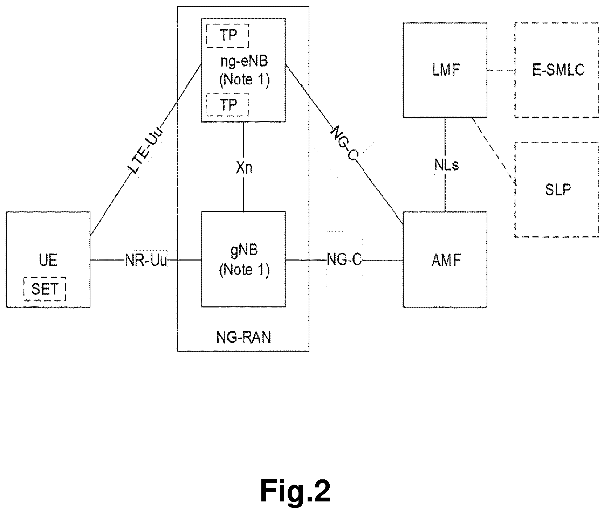

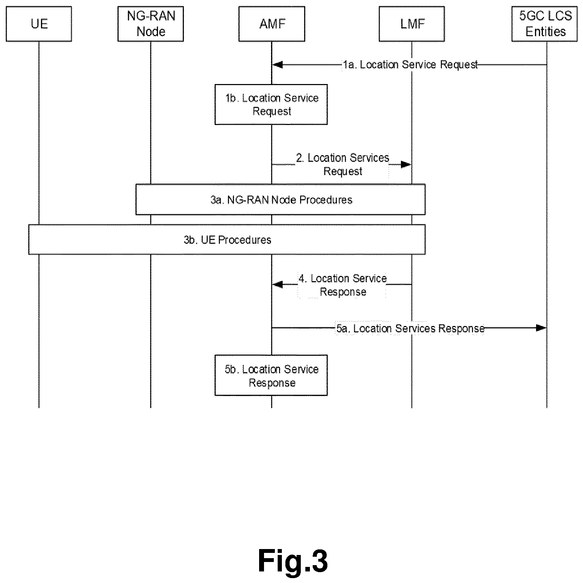

Le fonctionnement de tout ou partie de ces protocoles est notamment illustré aux figures 1 à 3.

Il existe donc un besoin d'améliorer le mécanisme de vérification des coordonnées GNSS du terminal utilisateur dans un réseau 5G tout en minimisant les impacts sur les différents équipements utilisés.

### Exposé de l'invention

La présente invention vise à remédier au moins en partie à ce besoin.

Plus particulièrement, l'invention vise à améliorer la détermination de la position d'un terminal utilisateur dans un réseau de cellules 5G.

Pour cela un premier objet de l'invention concerne un procédé de validation d'un positionnement d'un terminal utilisateur compatible 5G dans un réseau de cellules 5G. Le terminal utilisateur est adapté pour échanger des trames de service avec un satellite. Le satellite est adapté pour échanger des trames lien feeder avec une passerelle. La passerelle est reliée à un réseau central 5G, chaque cellule 5G du réseau 5G comprenant au moins une station de base, chaque station de base étant apte à communiquer avec le réseau central 5G. Le terminal utilisateur est apte à communiquer à un instant donné avec plusieurs stations de base des cellules 5G, dites stations de base de proximité. Le procédé de validation comprend une étape de détermination de premières données de positionnement du terminal utilisateur, lesdites premières données de positionnement étant une position GNSS du terminal utilisateur, lesdites premières données de positionnement étant envoyées par le terminal utilisateur au réseau central 5G via le satellite. Le procédé de validation comprend une étape d'envoi par le terminal utilisateur de secondes données de positionnement du terminal utilisateur vers le réseau central 5G, lesdites secondes données de positionnement étant basées sur tout ou partie de mesures de canaux de propagation réalisées par le terminal utilisateur sur les stations de base de proximité, ladite étape d'envoi étant réalisée via le satellite. Le procédé de validation comprend une étape d'envoi par les stations de base de proximité de troisièmes données de positionnement du terminal utilisateur vers le réseau central 5G, lesdites troisièmes données de positionnement étant basées sur des mesures de canaux de propagation réalisées par les stations de base de proximité sur le terminal utilisateur, ladite étape d'envoi étant réalisée sans passer par le satellite. Enfin, le procédé comprend une étape de comparaison, dans le réseau central 5G, des secondes données de positionnement avec les troisièmes données de positionnement, les premières données de positionnement du terminal utilisateur étant validées si les secondes données de positionnement sont compatibles avec les troisièmes données de positionnement.

Le réseau central 5G compare ainsi les secondes données de positionnement avec les troisièmes données de positionnement et décide si le terminal utilisateur peut être accepté dans le réseau 5G ou non.

Dans un mode de réalisation particulier, les secondes données de positionnement sont des mesures des canaux de propagation effectuées par le terminal utilisateur sur les émissions d'une ou plusieurs stations de base de proximité.

Dans un mode de réalisation particulier, les secondes données de positionnement sont des clés secrètes particulières du terminal utilisateur, lesdites clés secrètes particulières étant calculées à partir des canaux de propagation par le terminal utilisateur sur les émissions des stations de base de proximité.

Dans un mode de réalisation particulier, les secondes données de positionnement sont une clé secrète globale calculée à partir des clés secrètes particulières.

La clé secrète globale correspond à une empreinte électromagnétique. Une fois que l'authentification du positionnement du terminal utilisateur est réalisée, le terminal utilisateur et/ou le satellite et/ou la passerelle peuvent utiliser la clé secrète globale pour sécuriser le lien.

Dans un mode de réalisation particulier, les troisièmes données de positionnement sont les mesures des canaux de propagation par les stations de base de proximité sur les émissions du terminal utilisateur.

Dans un mode de réalisation particulier, les troisièmes données de positionnement sont des clés secrètes particulières des stations de base de proximité, lesdites clés secrètes étant calculées à partir des mesures canaux desdites stations de proximité sur les émissions du terminal utilisateur.

Dans un mode de réalisation particulier, les troisièmes données de positionnement sont une clé secrète globale de station de base calculées à partir des clés secrètes particulières.

Dans un mode de réalisation particulier, les clés secrètes sont ajoutées sur des protocoles LPP/NRPPa dans leur transmission au réseau central 5G.

Dans un mode de réalisation particulier, le procédé comprend initialement une étape d'authentification du terminal utilisateur dans le réseau central 5G.

Un autre objet de l'invention concerne un système de communication 5G comprenant :
- un réseau de cellules 5G, chaque cellule dudit réseau de cellules 5G comprenant une station de base, chaque station de base étant adaptée pour communiquer avec un terminal utilisateur compatible 5G ;
- un satellite, ledit satellite étant adaptée pour échanger des trames de service avec le terminal utilisateur ;
- une passerelle, ladite passerelle étant adaptée pour échanger des trames lien feeder avec le satellite ;
- un réseau central 5G, ledit réseau central étant relié à la passerelle, ledit réseau central étant apte à communiquer avec les stations de base ;
- ledit terminal utilisateur étant apte à communiquer à un instant donné avec plusieurs stations de base, dites stations de base de proximité ;
- ledit système de communication 5G étant apte à mettre en oeuvre les étapes d'un procédé de validation d'un positionnement du terminal utilisateur dans le réseau de cellules 5G, selon l'invention.

Un autre objet de l'invention concerne un procédé d'échange de premières données de positionnement et de secondes données de positionnement destiné à être mis en oeuvre par un terminal utilisateur compatible 5G pour une validation d'un positionnement dudit terminal utilisateur dans un réseau de cellules 5G, ledit terminal utilisateur étant adapté pour échanger des trames de service avec un satellite, ledit satellite étant adapté pour échanger des trames lien feeder avec une passerelle, ladite passerelle étant reliée à un réseau central 5G, chaque cellule 5G du réseau de cellules 5G comprenant une station de base, chaque station de base étant apte à communiquer avec le réseau central 5G, ledit terminal utilisateur étant apte à communiquer à un instant donné avec plusieurs stations de base, dites stations de base de proximité. Le procédé d'échange de données comprend :
- une étape de détermination des premières données de positionnement du terminal utilisateur, lesdites premières données de positionnement étant une position GNSS du terminal utilisateur, lesdites premières données de positionnement étant envoyées par le terminal utilisateur au réseau central 5G via le satellite ;
- une étape d'envoi par le terminal utilisateur des secondes données de positionnement du terminal utilisateur vers le réseau central 5G, lesdites secondes données de positionnement étant basées sur tout ou partie des mesures de canaux de propagation réalisées par le terminal utilisateur sur les stations de base de proximité, ladite étape d'envoi étant réalisée via le satellite, lesdites secondes données de positionnement étant aptes à être comparées à des troisièmes données de positionnement, lesdites troisièmes données de positionnement étant adaptées pour être envoyées par les stations de base de proximité sans passer par le satellite, lesdites troisièmes données de positionnement étant basées sur des mesures canaux de propagation réalisées par les stations de base de proximité sur le terminal utilisateur, les premières données de positionnement du terminal utilisateur étant validées si les secondes données de positionnement sont compatibles avec les troisièmes données de positionnement.

Un autre objet de l'invention concerne un terminal utilisateur compatible 5G, ledit terminal utilisateur étant apte à mettre en oeuvre les étapes d'un procédé d'échange de premières données de positionnement et de secondes données de positionnement selon l'invention pour une validation d'un positionnement dudit terminal utilisateur dans un réseau de cellules 5G.

Un autre objet de l'invention concerne un programme d'ordinateur comportant des instructions de programme exploitables par un terminal utilisateur compatible 5G selon l'invention, qui lorsqu'elles sont exécutées ou interprétées par ledit terminal utilisateur déclenchent la mise en oeuvre d'un procédé d'échange de première données de positionnement et de secondes données de positionnement selon l'invention pour une validation d'un positionnement dudit terminal utilisateur dans un réseau de cellules 5G.

Un autre objet de l'invention concerne un procédé d'échanges de troisièmes données de positionnement destiné à être mis en oeuvre par une station de base pour une validation d'un positionnement d'un terminal utilisateur compatible 5G dans un réseau de cellules 5G, ladite station de base, dite station de base de proximité étant apte à communiquer à un instant donné avec ledit terminal utilisateur, ledit terminal utilisateur étant adapté pour échanger des trames de service avec un satellite, ledit satellite étant adapté pour échanger des trames lien feeder avec une passerelle, ladite passerelle étant reliée à un réseau central 5G, la station de base étant apte à communiquer avec ledit réseau central 5G. Le procédé d'échange de données comprend :
- une étape d'envoi de troisièmes données partielles de positionnement vers le réseau central 5G sans passer par le satellite, lesdites troisièmes données de positionnement étant basées sur des mesures de canaux de propagation réalisées par la station de base, lesdites troisièmes données partielles de positionnement étant adaptées pour être combinées avec des troisièmes données partielles de positionnement basées sur des mesures de canaux de propagation réalisées par d'autres stations de base de proximité en communication avec le terminal utilisateur à l'instant donné pour former des troisièmes données de positionnement, lesdites troisièmes données de positionnement étant adaptées pour être comparées avec des secondes données de positionnement, lesdites secondes données de positionnement ayant été envoyées par le terminal utilisateur vers le réseau central 5G via le satellite, lesdites secondes données de positionnement étant basées sur les mesures de canaux de propagation réalisées par le terminal utilisateur sur les stations de base de proximité, des premières données de positionnement du terminal utilisateur dans le réseau de cellules 5G étant validées si les secondes données de positionnement sont compatibles avec les troisièmes données de positionnement, lesdites premières données de positionnement étant une position GNSS du terminal utilisateur, lesdites premières données de positionnement étant envoyées par le terminal utilisateur au réseau central 5G via le satellite.

Un autre objet de l'invention concerne une station de base apte à mettre en oeuvre les étapes d'un procédé d'échanges de troisièmes données de positionnement selon l'invention pour une validation d'un positionnement d'un terminal utilisateur dans un réseau de cellules 5G.

Un autre objet de l'invention concerne un programme d'ordinateur comportant des instructions de programme exploitables par une station de base selon l'invention, qui lorsqu'elles sont exécutées ou interprétées par ladite station de base déclenchent la mise en oeuvre d'un procédé d'échanges de troisièmes données de positionnement selon l'invention pour une validation d'un positionnement d'un terminal utilisateur dans un réseau de cellules 5G.

Un autre objet de l'invention concerne un procédé de traitement de premières données de positionnement, de secondes données de positionnement et de troisième données de positionnement d'un terminal utilisateur compatible 5G dans un réseau de cellules 5G, ledit terminal utilisateur étant adapté pour échanger des trames de service avec un satellite, ledit satellite étant adapté pour échanger des trames lien feeder avec une passerelle, ladite passerelle étant reliée à un réseau central 5G, chaque cellule 5G du réseau de cellules 5G comprenant une station de base, chaque station de base étant apte à communiquer avec le réseau central 5G, ledit terminal utilisateur étant apte à communiquer à un instant donné avec plusieurs stations de base des cellules 5G, dites stations de base de proximité. Le procédé de traitement comprend :
- une étape de réception des premières données de positionnement du terminal utilisateur, lesdites premières données de positionnement étant une position GNSS du terminal utilisateur, lesdites premières données de positionnement étant envoyées par le terminal utilisateur via le satellite ;
- une étape de réception de secondes données de positionnement du terminal utilisateur, lesdites secondes données de positionnement étant basées sur tout ou partie des mesures de canaux de propagation réalisées par le terminal utilisateur sur les stations de base de proximité, lesdites secondes données de positionnement étant envoyées par le terminal utilisateur via le satellite ;
- une étape de réception de troisièmes données de positionnement, lesdites troisièmes données de positionnement étant basées sur des mesures de canaux de propagation réalisées par les stations de base de proximité sur le terminal utilisateur, ladite étape d'envoi étant réalisée par les stations de base de proximité sans passer par le satellite ;
- une étape de comparaison des secondes données de positionnement avec les troisièmes données de positionnement, les premières données de positionnement du terminal utilisateur étant validées si les secondes données de positionnement sont compatibles avec les troisièmes données de positionnement.

Un autre objet de l'invention concerne un réseau central 5G apte à mettre en oeuvre les étapes d'un procédé de traitement de données de positionnement selon l'invention pour une validation d'un positionnement d'un terminal utilisateur dans un réseau de cellules 5G.

Un autre objet de l'invention concerne un programme d'ordinateur comportant des instructions de programme exploitables par un réseau d'accès 5G selon l'invention, qui lorsqu'elles sont exécutées ou interprétées par ledit réseau d'accès 5G déclenchent la mise en oeuvre d'un procédé de traitement de données de positionnement selon l'invention pour une validation d'un positionnement d'un terminal utilisateur dans un réseau de cellules 5G.

La présente invention sera mieux comprise à la lecture de la description détaillée de modes de réalisation pris à titre d'exemples nullement limitatifs et illustrés par les dessins annexés sur lesquels :
[Fig. 1] la figure 1 illustre une architecture logicielle d'un système de communication 5G selon l'art antérieur ;
[Fig. 2] la figure 2 illustre des échanges de données entre des éléments de l'architecture logicielle de la figure 1 ;
[Fig. 3] la figure 3 illustre un procédé pour la détermination d'un positionnement d'un terminal utilisateur via l'architecture logicielle de la figure 1 ;
[Fig. 4] la figure 4 illustre un système de communication 5G selon l'invention ;
[Fig. 5] la figure 5 illustre les étapes d'un procédé de validation d'un positionnement d'un terminal utilisateur mis en oeuvre par le système de communication 5G de la figure 4 selon un premier mode de réalisation ;
[Fig. 6] la figure 6 illustre un plan de contrôle et une architecture satellite Release 17 ;
[Fig. 7] la figure 7 illustre un premier exemple d'une organisation d'une information SKG avec une quantification sur 8 bits par sous/porteuse ;
[Fig. 8] la figure 8 illustre un second exemple d'une organisation d'une information SKG avec une quantification sur 4 bits par sous/porteuse ;
[Fig. 9] la figure 9 illustre un troisième exemple d'une organisation d'une information SKG avec une quantification sur 8 bits par sous/porteuse ;
[Fig. 10] la figure 10 illustre un troisième exemple d'une organisation d'une information SKG avec une quantification sur 16 bits par sous/porteuse ;
[Fig. 11] la figure 11 illustre les étapes d'un procédé de validation d'un positionnement d'un terminal utilisateur mis en oeuvre par le système de communication 5G de la figure 4 selon un second mode de réalisation ;
[Fig. 12] La figure 12 illustre les étapes d'un procédé de validation d'un positionnement d'un terminal utilisateur mis en oeuvre par le système de communication 5G de la figure 4 selon un troisième mode de réalisation ;
[Fig. 13] La figure 13 illustre un premier exemple de modifications de la procédure E-CID dans le cadre de la NRPPa TS 38.455 ;
[Fig.14] La figure 14 illustre un second exemple de modifications de la procédure E-CID dans le cadre de la NRPPa TS 38.455 ;
[Fig.15] La figure 15 illustre un troisième exemple de modifications de la procédure E-CID dans le cadre de la NRPPa TS 38.455 ;
[Fig.16] La figure 16 illustre des exemples de modification NRPPa TS 38.455 ;
[Fig.17] La figure 17 illustre un premier exemple de modification procédure si une mesure sur NR E-CID est effectuée, selon LPP TS 37.355 ;
[Fig.18] La figure 18 illustre un second exemple de modification procédure si une mesure sur NR E-CID est effectuée, selon LPP TS 37.355 ;
[Fig.19] La figure 19 illustre un troisième exemple de modification procédure si une mesure sur NR E-CID est effectuée, selon LPP TS 37.355 ;
[Fig.20] La figure 20 illustre un premier exemple de modification procédure si une mesure sur LTE E-CID est effectuée, selon LPP TS 37.355 ;
[Fig.21] La figure 21 illustre un second exemple de modification procédure si une mesure sur LTE E-CID est effectuée, selon LPP TS 37.355.

L'invention n'est pas limitée aux modes de réalisation et variantes présentées et d'autres modes de réalisation et variantes apparaîtront clairement à l'homme du métier.

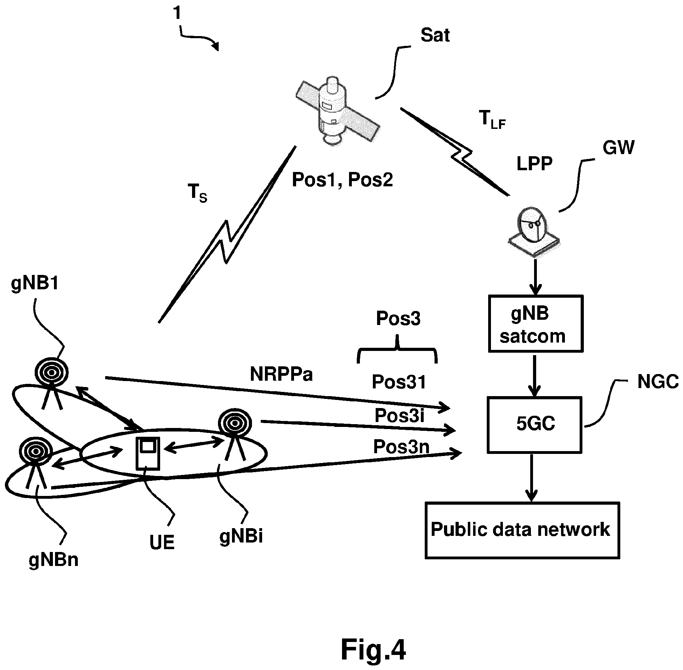

La figure 4 illustre un système de communication 5G 1 pour une communication 5G avec un terminal utilisateur UE.

Le système de communication 5G comprend :
- un réseau de cellules 5G ;
- des stations de base de proximité (gNB1,..., gNBi, ..., gNBn) ;
- un satellite Sat ;
- une passerelle GW ;
- une station de base gNB satcom ;
- un réseau central 5GC.

Le réseau de cellules 5G comprend une pluralité de cellules 5G définissant des zones de couverture où la connexion avec le terminal utilisateur UE est possible. Chaque cellule 5G comprend au moins une station de base adaptée pour émettre et recevoir de données sur ladite cellule 5G. Lorsque le terminal utilisateur UE se déplace dans le réseau de cellules 5G, il est en connexion, à un instant donné, avec une pluralité de stations de base de différentes cellules 5G dites stations de base de proximité gNB1,..., gNBi, ..., gNBn.

On notera que le terminal utilisateur UE est compatible 5G et plus particulièrement compatible avec la version n°17 du standard 3GPP de sorte que ce terminal possède une fonctionnalité NTN (pour « Non-Terrestrial Network » en anglais).

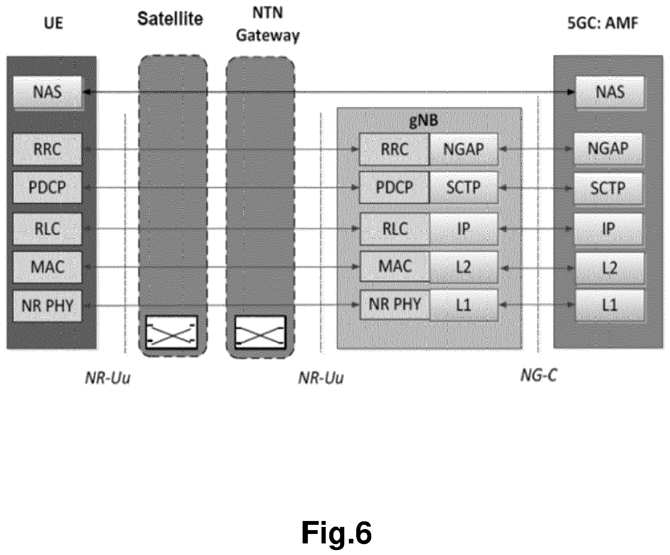

Le système de communication 1 comprend également le satellite Sat. Ce satellite Sat est adapté pour échanger des trames de service T_{S} avec le terminal utilisateur UE. Le satellite Sat est également adapté pour échanger des trames lien feeder T_{LF} avec la passerelle GW. Le satellite Sat est, par exemple, un satellite défilant sur une orbite non-géostationnaire dit satellite NGSO (pour « Non-Geostationary Orbit » en anglais), tel qu'un satellite LEO (pour « Low-Earth Orbit » en anglais), vLEO (pour « very Low-Earth Orbit » en anglais) ou MEO (pour « Medium-Earth Orbit » en anglais). Le point de référence de ce satellite se déplace par rapport aux stations de base de proximité gNB1,..., gNBi, ..., gNBn et ce délai est grandement variable, par exemple il peut être compris entre 2 et 5 ms avec une vitesse de variation pouvant atteindre jusqu'à 25ppm dans le cas où le satellite est sur une orbite à 600 km (LEO@600km). La figure 6 illustre un plan de contrôle (« Contrôle Plane » en anglais ou CP) et une architecture du satellite Sat selon la Release-17 5G NR. Cette architecture est compatible avec la version TR 38.821 divulguant une pile protocolaire CP 5G NR NTN pour un satellite non régénératif (satellite répéteur, avec un relayage au niveau RF, « RF Repeater » ou satellite « Bend-pipe »).

La passerelle GW permet de rendre possible une communication entre un environnement filaire et l'environnement radio associé au satellite SAT. Ainsi, la passerelle GW est adaptée pour communiquer avec le réseau central 5GC. Dans le mode de réalisation de la figure 4, la passerelle GW communique avec le réseau central 5G via la station de base gNB satcom.

Le réseau central 5GC comprend ici un module NGC (pour « Next Génération Core » en anglais) et qui est connecté avec un réseau de données publiques public data network (PDN).

Le terminal utilisateur UE est adapté pour déterminer des premières données de positionnement Pos1 via une communication avec un ou plusieurs satellites Sat. Ces premières données de positionnement Pos1 correspondent à une position GNSS du terminal utilisateur UE. Les premières données de positionnement Pos1 sont transmises au réseau central 5G via le satellite Sat.

Le terminal utilisateur UE est également adapté pour déterminer des secondes données de positionnement Pos2. Ces secondes données de positionnement Pos2 sont basées sur tout ou partie de mesures de canaux réalisées par les stations de base de proximité gNB1,..., gNBi, ..., gNBn. Le terminal utilisateur UE est ainsi capable de communiquer avec les différentes stations de bases par différents canaux radio i. L'information CHi provenant d'un canal radio i peut être la réponse impulsionnelle du canal i ou les valeurs de cette réponse pour certains multi-trajets seulement, la réponse en fréquence du canal i ou les valeurs de cette réponse pour certaines sous-porteuses seulement. L'information transmise peut l'être d'une manière périodique, apériodique, évènementielle, etc.

Chaque réponse impulsionnelle ou réponse en fréquence du canal radio peut être évaluée sur une configuration de bande donnée en rapport avec la technologie GSM,CDMA, HSDPA, HSUPA, LTE, WiMax, WiFi, 802.11 ou autre (pas seulement 5G NR) en cas de connexion avec le 5G Core.

Il est également possible de considérer un fonctionnement avec une architecture/scenario non-roaming ou roaming.

Chaque réponse impulsionnelle ou réponse en fréquence du canal radio (mono-trajet ou multi-trajet) peut être évalué sur une sous-porteuse, sur plusieurs sous-porteuses, sur un groupe de sous-porteuses (généralement un multiple de 12 sous-porteuses).

La taille d'une sous porteuse (par exemple 7,5 kHz, 15 kHz, 30 kHz, 60 kHz, 120 kHz, 240 kHz ou 480 kHz) peut changer avec la numérologie ou en fonction de la technologie utilisée.

Pour un canal de type flat fading (en OFDM 5G, par exemple), la valeur du canal CHi peut se traduire par une simple amplitude, qui peut être quantifiable sur, par exemple, 8 bits, 16 bits, 32 bits, 64 bits, 128 bits ou 256 bits.

Le concept de sous-porteuse et variation du signal reçu sur une sous-porteuse est lié à la forme d'onde OFDM. Cette forme d'onde résulte d'un multiplexage par répartition orthogonale de la fréquence. La technologie OFDM à préfixe cyclique (CP-OFDM) est devenue le choix de prédilection pour la 5G NR.

Dans le contexte des normes cellulaires, la « numérologie » fait référence à la durée de symbole et à l'espacement de sous-porteuses de la couche physique. Le 3GPP a établi une numérologie flexible qui ajuste l'espacement entre les sous-porteuses orthogonales et commence par l'espacement de 15 kHz de la technologie LTE.

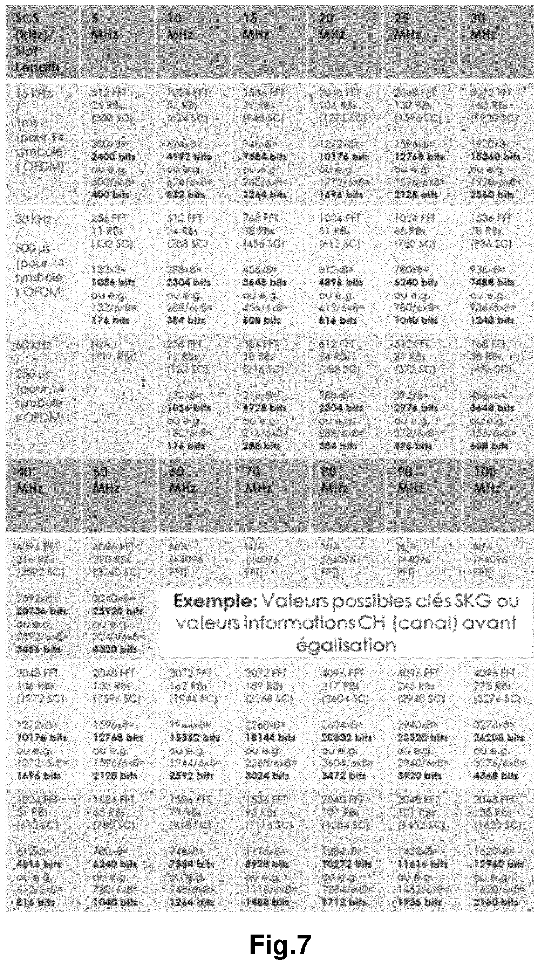

La figure 7 illustre un premier exemple d'une organisation d'une information SKG avec une quantification sur 8 bits par sous/porteuse.

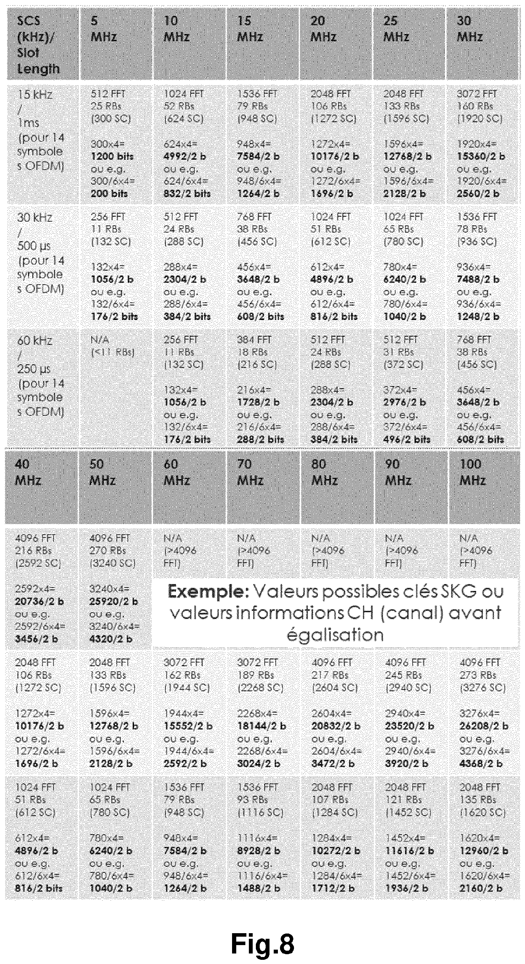

La figure 8 illustre un second exemple d'une organisation d'une information SKG avec une quantification sur 4 bits par sous/porteuse (16 valeurs/sous-porteuse).

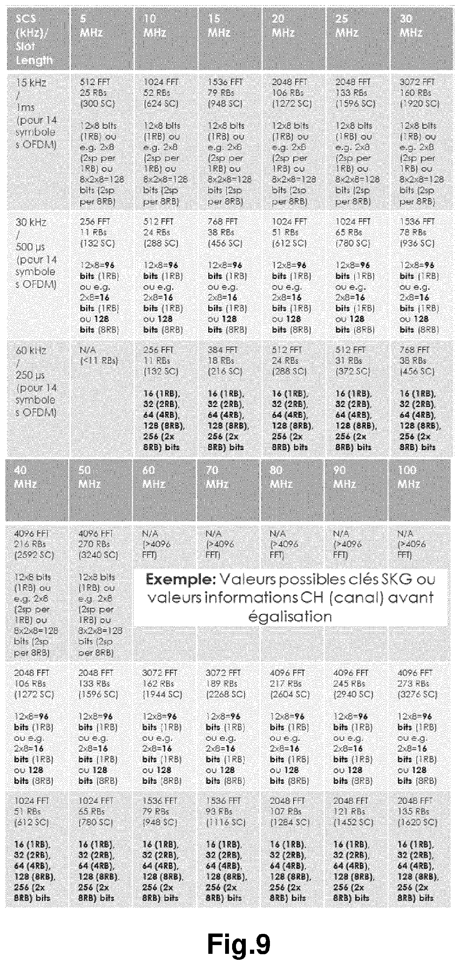

La figure 9 illustre un troisième exemple d'une organisation d'une information SKG avec une quantification sur 8 bits par sous/porteuse avec une estimation sur un multiple de 12 sous-porteuses SP/Ressource Blocs RBs (valeur fixe) ou éventuellement multiple de 2 sous-porteuses sur 12.

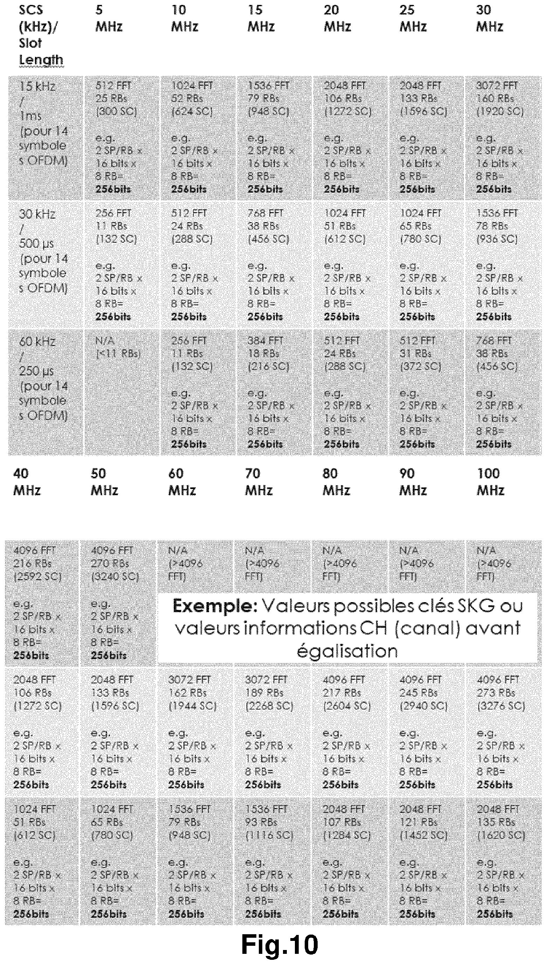

La figure 10 illustre un quatrième exemple d'une organisation d'une information SKG avec une quantification sur 16 bits/sous porteuse avec une estimation sur un multiple de 2 sous-porteuses sur 12 (1RB). Dans cette alternative un « security key IE » (IE correspond à « Information Element » en anglais, élément d'information pour la clé de sécurité) sur NG-AP est défini sur 256 bits.

A partir de ses mesures de canaux sur les émissions des stations de base de proximité gNB1,..., gNBi, ..., gNBn, le terminal utilisateur UE peut déterminer des clés secrètes particulières SKGᵢ associées respectivement aux stations de base de proximité gNB1,..., gNBi, ..., gNBn. Ces différentes clés secrètes sont envoyées au réseau central 5GC via le satellite Sat.

Préférentiellement, le terminal utilisateur UE est apte à déterminer une clé secrète globale SKG calculée à partir des différentes clés secrètes particulières SKGᵢ. Cette clé secrète globale SKG est, par exemple, une sommation ou une concaténation des différentes clés secrètes particulières SKG_{i.}

On notera que lorsque le terminal utilisateur UE transmet des clés secrètes particulières SKGᵢ, le réseau central 5GC est apte à reconstituer une clé secrète globale SKG à partir desdites différentes clés particulières SKGᵢ.

L'utilisation de clés secrètes particuliers SKGᵢ ou d'une clé secrète globale SKG permet de limiter la quantité d'informations envoyée via le satellite Sat au réseau central 5GC.

On notera que dans la transmission des clés secrètes particulières SKGᵢ, il est possible de définir de nouveaux éléments d'information dans des messages existants tels que dans les couples de messages :
- MEASUREMENT INITIATION REQUEST et MEASUREMENT INITIATION RESPONSE, ou
- MEASUREMENT UPDATE et MEASUREMENT REPORT, ou
- INFORMATION REQUEST et INFORMATION RESPONSE, ou
- INFORMATION UPDATE, ou
- MEASUREMENT REQUEST et MEASUREMENT RESPONSE.

Il est également possible de créer un nouveau message pour des clés secrète globale SKG dans des couples de messages :
- SKG MEASUREMENT INITIATION REQUEST et SKG MEASUREMENT INITIATION RESPONSE, ou
- SKG MEASUREMENT UPDATE et SKG MEASUREMENT REPORT, ou
- SKG INFORMATION REQUEST et SKG INFORMATION RESPONSE, ou
- SKG INFORMATION UPDATE, ou
- SKG MEASUREMENT REQUEST et SKG MEASUREMENT RESPONSE.

Les stations de base de proximité gNB1,..., gNBi, ..., gNBn sont adaptées pour transmettre des troisièmes données de positionnement Pos3 vers le réseau central 5GC, et plus particulièrement vers le module NGC. Cette transmission de troisièmes données de positionnement Pos3 se fait sans passer par le satellite Sat. Par exemple, les troisièmes données de positionnement Pos3 sont transmises au réseau central 5G via une fibre optique. Les troisièmes données de positionnement sont basées sur des mesures de canaux réalisées par les stations de base de proximité gNB1,..., gNBi, ..., gNBn sur les émissions du terminal utilisateur UE. Préférentiellement, chaque station de base de proximité gNB1,..., gNBi, ..., gNBn est adaptée pour calculer une clé secrète particulière SKG'ᵢ qu'elle envoie au réseau central 5GC. En variante, une station de base de proximité peut recueillir l'ensemble des mesures de canaux réalisés par les stations de base de proximité et calculer une clé secrète globale SKG' correspondant, par exemple, à une sommation ou une concaténation des clés secrètes particulières SKG'ᵢ. Cette clé secrète globale SKG' est ensuite transmise au réseau central 5GC.

Suite à la réception des secondes données de positionnement Pos2 et des troisièmes données de positionnement Pos3, le réseau central 5GC est adapté pour comparer ces données. Il peut ainsi en vérifier la compatibilité. Par exemple, il peut comparer les clés secrètes particulières SKGᵢ, SKG'ᵢ. En variante, le réseau central 5GC compare les clés secrètes générales SKG, SKG'. Si les données de positionnement Pos2 et Pos3 sont compatibles, le réseau central 5GC valide les premières données de positionnement Pos1 du terminal utilisateur UE et le terminal peut continuer à utiliser le réseau 5G.

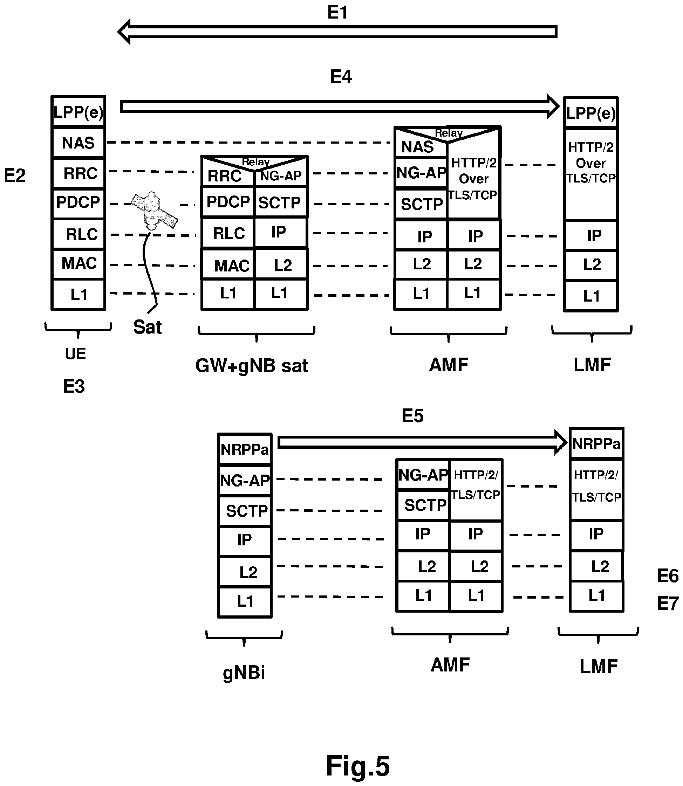

La figure 5 illustre les étapes d'un procédé de validation d'un positionnement d'un terminal utilisateur.

Dans une première étape E1, une entité LMF (pour « Location Management Function » en anglais) envoie vers le terminal utilisateur UE un message indiquant un nombre de sources à mesurer.

Dans une seconde étape E2, le terminal utilisateur UE fait une sélection des sources les plus puissantes, c'est-à-dire des stations de base de proximité les plus proches du terminal utilisateur UE.

Dans une troisième étape E3, le terminal utilisateur UE détermine les secondes données de positionnement Pos2 à partir de mesures effectuées au niveau de la couche PHY (L1). Ce terminal utilisateur UE peut pour cela obtenir les différentes clés secrètes particulières SKGᵢ des différentes stations de base de proximité et les transmettre. En variante, il peut faire une opération sur ces clés secrètes particulières SKGᵢ, telle qu'une sommation, pour en déduire une clé secrète générale SKG.

Dans une quatrième étape E4, le terminal utilisateur UE transmet les secondes données de positionnement Pos2 par l'intermédiaire d'une couche LPP (pour « LTE Positioning Protocol » en anglais). Dans un mode de réalisation particulier, les secondes données de positionnement Pos2 sont transmises au réseau central 5GC avec les données de positionnement Pos1.

Dans une cinquième étape E5, une des stations de base de proximité gNBi envoie les troisièmes données de positionnement Pos3. Pour rappel, ces troisièmes données de positionnement peuvent être des mesures de canaux par la station de base de proximité gNBi sur les émissions du terminal utilisateur UE ou une clé secrète particulière SKG'ᵢ produite à partir de ces mesures.

A la réception des secondes données de positionnement Pos2 et des troisièmes données de positionnement Pos3, le module LMF peut valider la position GNSS du terminal utilisateur UE dans une étape E6. Dans le cas où il n'y a pas de validation, le réseau 5G rejette le terminal utilisateur UE dans une étape E7.

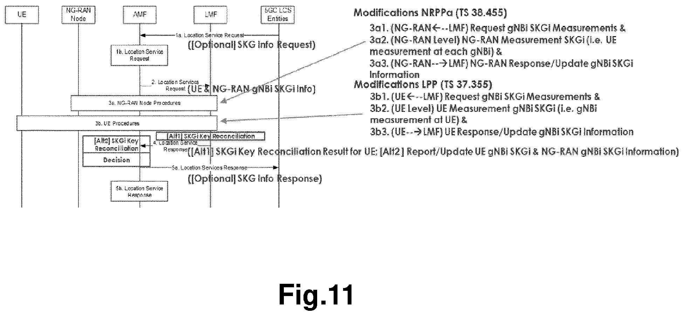

Dans un mode de réalisation alternatif illustré à la figure 11, il est présenté les différentes étapes pour une Décision/Réconciliation. Dans ce mode de réalisation, le message peut être généré par des entités LCS, l'AMF, le LMF. La réconciliation UE SKGᵢ et NG-RAN SKGᵢ peut être dans le LMF ou l'AMF. La décision peut être dans l'AMF et le LMF. Le résultat peut être :
- Un message Invalid Position (pour position invalide) ;
- Un message « Current UE position not matching UE PLMN sélection » (pour position UE qui ne correspond pas à la sélection PLMN - ou « Public Land Mobile Network » pour le réseau terrestre ou le réseau satellitaire, si le mobile NTN UE n'est pas connecté au bon PLMN e.g. parce que la position UE ne correspond pas à la zone géographique opéré par le PLMN du réseau satellitaire) ;
- Un message « AMF sélection » ou « AMF reselection » (pour la sélection/ré-sélection d'AMF si le mobile NTN UE n'est pas connecté au bon AMF e.g. parce que la position UE ne correspond pas à l'AMF qui doit gérer la zone géographique ou l'utilisateur UE se trouve) ;

- Un message UE Rejection (pour une rejection du terminal utilisateur) ;
- Un message UE Restriction (pour une restriction du terminal utilisateur) ;
- Un message Valid Position (pour une position valide/validé par le réseau) ;
- Une décision de continuer la communication et pas de message.

Dans le mode de réalisation alternatif illustré à la figure 11, l'entité 5GC LCS peut optionnellement transmettre une demande d'information ou demande de clé secrète SKG à l'AMF, ou tout simplement l'entité 5GC LCS peut demander l'activation de la méthode basée sur la notion de clé secrète SKG pour validation du positionnement du terminal utilisateur. Cette demande peut être encapsulée dans un champ du message « 1a. Location Service Request ([Optional] SKG Info Request) ». Suite à ce message, l'AMF peut effectuer l'étape « 1b. Location Service Request » et va envoyer vers LMF un message « 2. Location Service Request » pour préciser à l'LMF dans des champs spécifiques que l'AMF a besoin de connaitre les clés secrètes SKGᵢ pour le terminal utilisateur (avec les stations de base de proximité) et les clés secrètes SKG'ᵢ pour NG-RAN ou une ou plusieurs stations de base de proximité (avec le terminal utilisateur) pour e.g. la validation du positionnement UE. Ces demandes peuvent être encapsulées dans des champs spécifiques du message « 2. Location Service Request ». Une fois que les échanges avec les messages 3a1, 3a2, 3a3 sont effectués entre le LMF et NG-RAN Node (e.g. en utilisant le protocole NRPPa avec les stations de base de proximité, dans l'étape « 3a. NG-RAN Node Procedures ») et les échanges avec les messages 3b1, 3b2, 3b3 sont effectués entre le LMF et le UE (e.g. en utilisant le protocole LPP avec le UE, et e.g. en utilisant le lien par satellite, dans l'étape « 3b. UE Procedures »), le LMF peut effectuer la réconciliation de clés SKGᵢ et SKG'ᵢ (Alt1) et peut envoyer dans une première alternative (Alt1) le message «4. Location Service Response » avec un champ spécifique qui contient le/les résultats pour la réconciliation de clés secrètes SKGᵢ et SKG'ᵢ avec le UE. Dans une première alternative (Alt1) le message «4. Location Service Response » présente un champ spécifique qui contient le/les résultats pour la réconciliation de clés secrètes SKGᵢ et SKG'ᵢ avec le UE. Dans une deuxième alternative (Alt2) le message « 4. Location Service Response » présente un champ ou plusieurs champs spécifiques avec le/les résultats (complets) de clés secrètes SKGᵢ et SKG'ᵢ avec le UE, et cela peut se présenter sous forme de rapport (« Report » en anglais) ou de mise-à-jour (« Update » en anglais). Suite à la transmission du message « 4. Location Service Response », l'AMF peut effectuer dans une deuxième alternative (Alt2) la réconciliation de clés secrètes SKGᵢ et SKG'ᵢ ou tout simplement prendre une ou plusieurs décisions (Alt1 et Alt2) avec ce qui faut faire par la suite (e.g. valider la position du terminal utilisateur UE, rejeter le terminal utilisateur UE du réseau satellite, faire une restriction du terminal utilisateur UE dans le réseau e.g. en termes de services, sélectionner ou ré-sélectionner un nouveau AMF (« AMF sélection » ou « AMF reselection » pour la sélection/ré-sélection d'AMF - comme décision ou comme message e.g. depuis l'AMF NTN vers le nouveau AMF ou depuis l'AMF NTN vers l'UE NTN pour indiquer qu'une ré-selection AMF ou PLMN est nécessaire, ou depuis LMF vers le nouveau AMF/ancien AMF ou directement vers l'UE NTN pour indiquer qu'une ré-selection AMF ou PLMN est nécessaire), invalider la position du terminal utilisateur UE, ou tout simplement continuer la communication), y compris s'il faut activer la sécurité/le chiffrement entre le UE et le lien satellite/gNB Satcom avec une clé secrète SKG. Optionnellement, l'AMF peut transmettre un message « 5a. Location Services Response » vers les entités 5GC LCS avec les informations concernant les clés secrètes SKG ou tout simplement la réponse avec l'activation de la procédure SKG. Optionnellement, dans le message de sélection/ré-sélection, dans le message 4, ou dans la réponse envoyée vers l'UE, vers le nouvel AMF, vers 5G LCS ou vers une autre entité réseau, l'ancien AMF peut indiquer le code du pays où le UE NTN se trouve (e.g. « Country of UE location », « Country code », etc.).

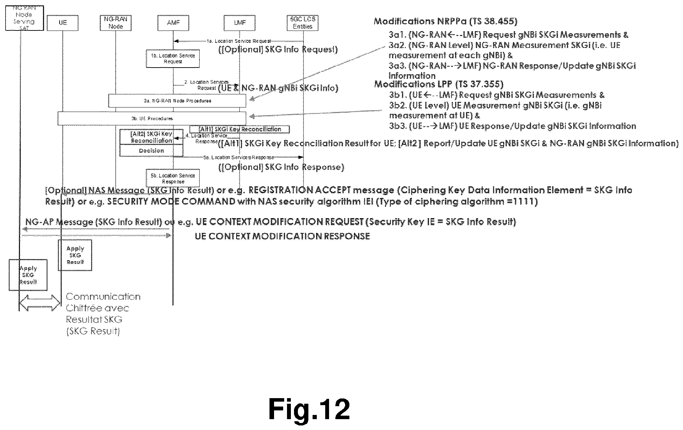

La figure 12 illustre un autre mode de réalisation présentant les différentes étapes pour une Décision/Réconciliation avec une activation SKG réconciliée pour la communication. La figure 12 illustre également l'activation d'une communication chiffrée entre le terminal utilisateur UE et le gNB Satcom, en utilisant un résultat de réconciliation de clés sécrètes SKG, une clé globale SKG, une clé secrète particulière, ou une clé secrète générale. La clé secrète SKG peut être transmise par l'AMF vers le gNB Satcom en utilisant un protocole NG-AP. Optionnellement, NG-RAN peut sélectionner ou ré-sélectionner un nouvel AMF (« AMF sélection » ou « AMF reselection » pour la sélection/ré-sélection d'AMF - comme décision ou comme message e.g. depuis NG-RAN NTN ou TN, ou depuis LMF vers le nouvel AMF ou l'ancien AMF). Optionnellement, NG-RAN peut indiquer le code du pays où le UE NTN se trouve (e.g. « Country of UE location », « Country code », etc.). Optionnellement, la décision pour la réconciliation des clés peut être prise dans le NG-RAN, l'AMF, l'LMF.

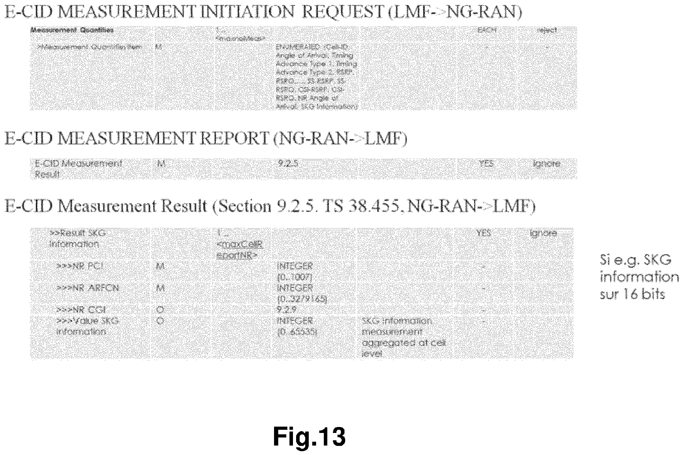

Les figures 13 à 15 illustrent des exemples de modifications de la procédure E-CID dans le cadre de la NRPPa TS 38.455.

La figure 13 illustre ainsi un premier exemple de modifications de la procédure E-CID dans le cadre de la NRPPa TS 38.455.

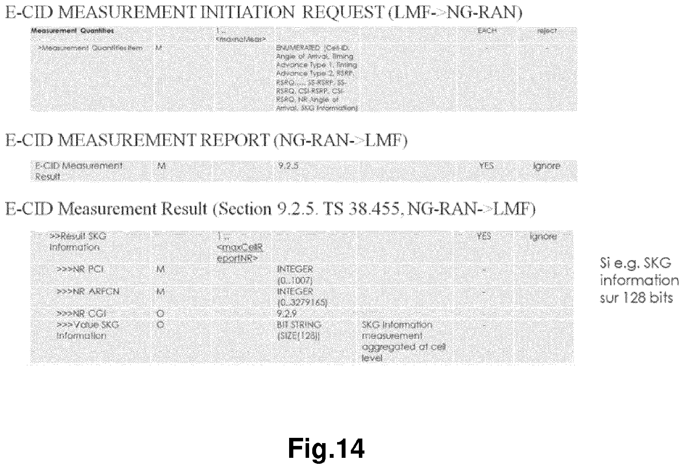

La figure 14 illustre un second exemple de modifications de la procédure E-CID dans le cadre de la NRPPa TS 38.455.

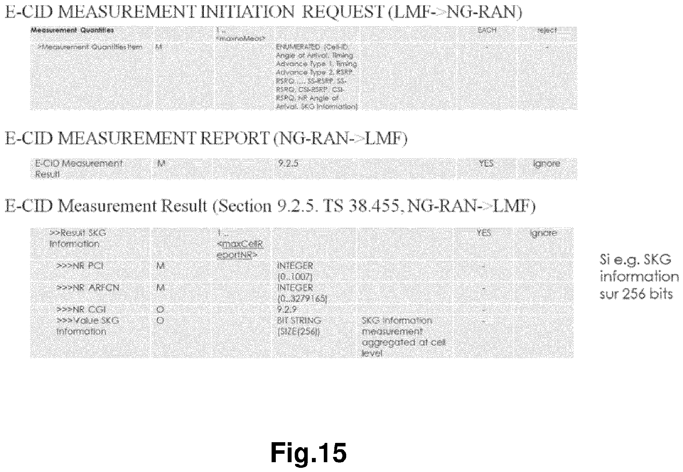

La figure 15 illustre un troisième exemple de modifications de la procédure E-CID dans le cadre de la NRPPa TS 38.455.

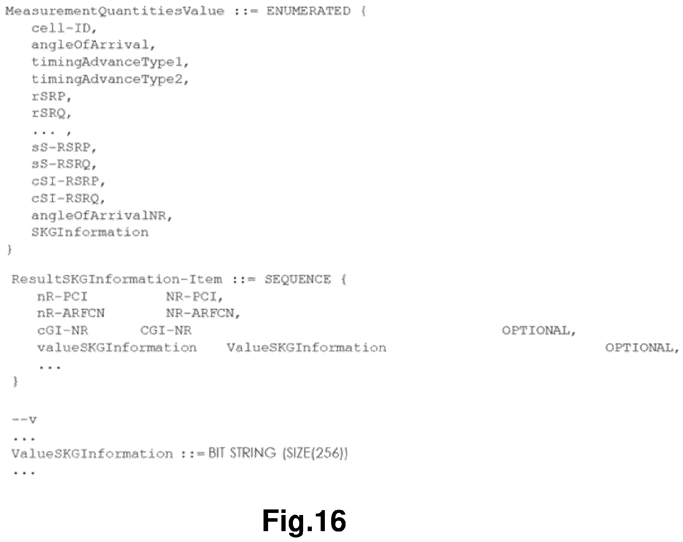

La figure 16 illustre des exemples de modification NRPPa TS 38.455 ;

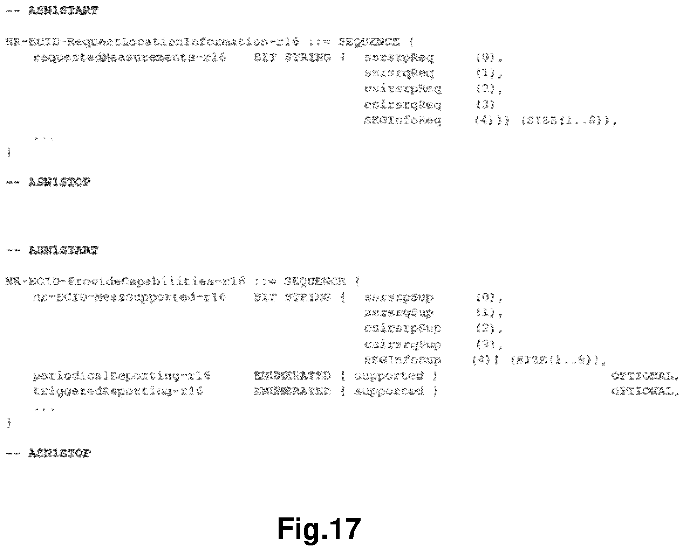

La figure 17 illustre un premier exemple de modification procédure si une mesure sur NR E-CID est effectuée, selon LPP TS 37.355.

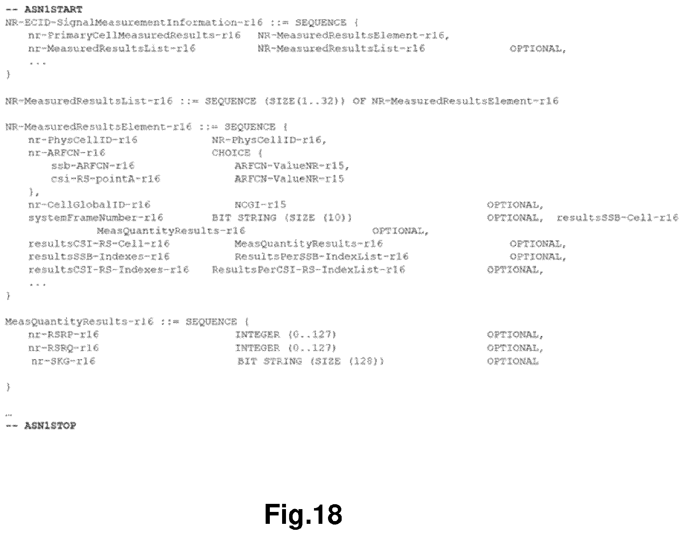

La figure 18 illustre un second exemple de modification procédure si une mesure sur NR E-CID est effectuée, selon LPP TS 37.355 ;

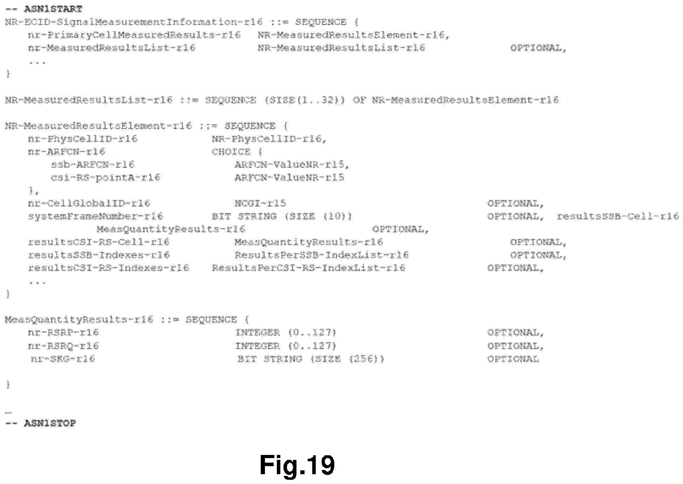

La figure 19 illustre un troisième exemple de modification procédure si une mesure sur NR E-CID est effectuée, selon LPP TS 37.355 ;

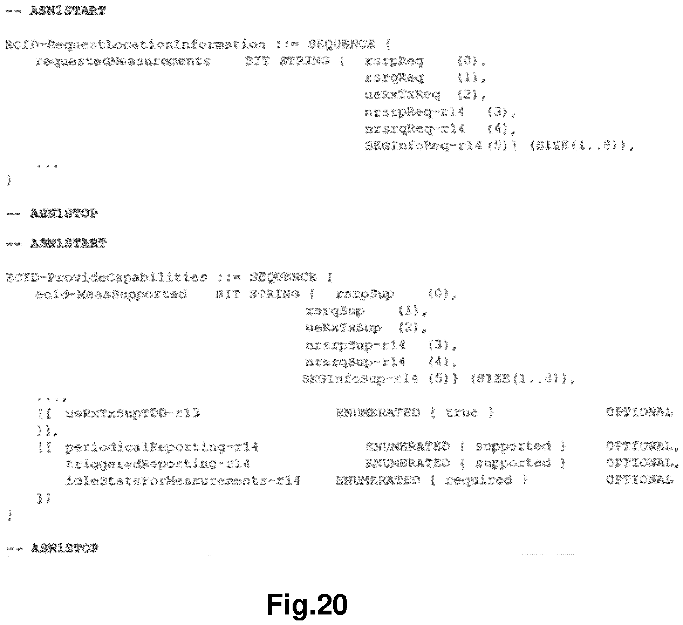

La figure 20 illustre un premier exemple de modification procédure si une mesure sur LTE E-CID est effectuée, selon LPP TS 37.355 ;

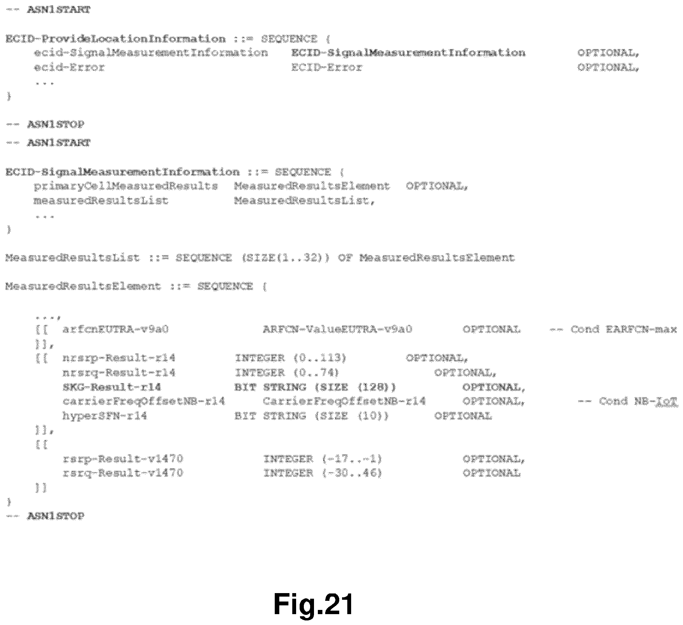

La figure 21 illustre un second exemple de modification procédure si une mesure sur LTE E-CID est effectuée, selon LPP TS 37.355.

L'invention propose ainsi :
- l'utilisation de clés SKG pour valider le positionnement géographique pour une connexion par satellite 5G ;
- les informations SKG sont ajoutées sur les protocoles LPP/NRPPa ;
- il s'agit donc d'une utilisation SKG de deuxième ordre, pour valider les données GNSS transmises/la position obtenue par GNSS/les coordonnées géographiques transmises par le terminal utilisateur ;
- les clés SKG correspondent à une empreinte numérique ;
- le réseau central 5GC compare les empreintes et décide si le terminal utilisateur UE va être accepté dans le réseau ou pas ;
- une fois que l'authentification de la position est réalisée, le terminal utilisateur et/ou le satellite et/ou la passerelle peuvent utiliser la clé SKG pour sécuriser le lien.

L'invention n'est pas limitée aux modes de réalisations décrits.

Ainsi, il est ainsi possible d'optimiser les résultats en fonction de qui est utilisé comme pilote/nombre de sous-porteuses et de la granulométrie/quantification nécessaire.

Ainsi, l'échange SKG peut être périodique ou apériodique.

Ainsi, en fonction de la bande passante, les configurations de tailles SKG peuvent varier.

Ainsi, l'invention est applicable en TDD si la voie montante et la voie descendante utilisent la même fréquence porteuse (canal réciproque UE->gNBi en UpLink ou gNBi ->UE en DownLink pour la détermination CHi, pour assurer une estimation de canal de propagation réciproque au niveau gNBi et au niveau UE et des générations de clés similaires) mais aussi potentiellement en FDD.

Ainsi, l'invention peut impliquer l'utilisation d'un g-SMLC (next-generation Serving Mobile Location Centre) et/ou e-SMLC et/ou GMLC (Gateway Mobile Location Centre), et/ou SLP (SUPL Location Platform, potentiellement utilisant un Subscriber LCS privacy Profile, pour un user-plane based solution) et utilisant un SUPL (Secure User Plane Location), et/ou LBS (location-based service) et/ou LCS (Location Service), et/ou protocoles LPP (LTE Positioning Protocol) & NRPPa (NR Positioning Protocol A), qui sont des entités/services/protocoles spécifiques au niveau du réseau coeur. L'invention peut également utiliser une de ces entités/fonctions : Access and Mobility Management Function (AMF), LMF (Location Management Function), etc.

Dans une alternative d'implémentation, la station de base de proximité peut être par exemple une macro cell, une small cell, une pico cell, une wide area BS ou tout autre type de BS (Base Station), ou un noeud IAB (Integrated Access Backhaul), un Remote Radio Head (RRH), un point de transmission (TP), un point d'accès ou un Access Point (AP) WiFi/WLAN de confiance.

Dans un autre exemple, au lieu d'utiliser le protocole LPP pour transmettre la clé secrète particulière SKGᵢ ou la clé secrète générale SKG, le UE peut utiliser un autre moyen de transmission voir par exemple le protocole RRC (pour « Radio Ressource Control » en anglais) pour transmettre la/les clés vers le gNB Satcom, et puis le gNB Satcom peut utiliser un protocole de type NRPPa pour la transmissions des données SKG vers le 5GC et/ou vers LMF/5G LCS.

Comme alternatives pour la réconciliation de clés et les alternatives possible, le message initial d'utilisation SKG peut être généré par exemple par le 5GC, les entités 5GC LCS, le AMF, le LMF, le gNB etc. ; la réconciliation de clés (Pos2, Pos3) peut s'effectuer par exemple au niveau LMF, AMF, etc. ; la décision qui concerne l'action effectuée par le 5GC peut être par exemple au niveau AMF, LMF, etc. ; le résultat de la décision peut être par exemple un message de rejection UE (e.g. UE Rejection Message vers e.g. UE et/ou PCF pour la fonction « Policy and Charging Function »), de restriction UE (UE Restriction Message vers e.g. NG-RAN et/ou PCF), un message de position invalide (e.g. Invalid Position Message vers e.g. LMF ou 5GC LCS ou autre(s) entité(s) 5GC), un message de position valide (e.g. vers les entités LMF ou 5GC LCS), une décision de continuer la communication et sans aucun message transmis vers les différentes entités 5GC/NG-RAN/UE.

D'autres alternatives d'implémentation peuvent utiliser un message NAS (voir TS 24.501) qui pourrait contenir une clé secrète SKG ou le résultat de la réconciliation de clés (e.g. une clé secrète SKG globale) entre le AMF et l'UE ou e.g. un message REGISTRATION ACCEPT avec une information SKG, ou éventuellement un SECURITY MODE COMMAND qui informe le UE que l'algorithme de chiffrement sera base sur SKG (1 bit d'information ajouté dans le type d'algorithme de chiffrement). L'AMF peut également communiquer la clé secrète SKG au NG-RAN Satcom (ou gNB Satcom) dans un message de type NG-AP (voir TS 38.413) avec le résultat de la réconciliation de clés (e.g. une clé secrète SKG globale) ou e.g. un message UE CONTEXT MODIFICATION REQUEST avec le champ « Security Key IE » égal e.g. à la clé/à une clé secrète SKG globale. Optionnellement, l'invention peut implémenter la sécurisation/le chiffrage du lien entre le UE et le réseau d'accès satellite 5G NR avec la clé secrète SKG. Le chiffrage/la sécurisation du lien peut s'effectuer dans un seul sens ou dans les deux sens de communication.

Comme alternative, l'implémentation 5G et surtout 5GC peut s'effectuer en utilisant une implémentation et/ou des concepts Software Defined Network en anglais ou SDN.

Ainsi, pour mesurer les canaux CHi, l'invention peut utiliser les pilotes suivants (exemples non-restrictifs): Demodulation Reference Signals (DM-RS), Sounding Reference Signals (SRS), Channel State Information Reference Signals (CSI-RS), Positioning Reference Signals (PRS), Tracking Reference Signals (TRS), PSS/SSS (Primary/Secondary Synchronization Signals) and potentiellement d'autres comme les préambules PRACH ou autre type de signal émis par le UE ou le gNB.

Ainsi, il est possible de prévoir d'autres modifications dans d'autres messages parmi ceux décrites dans le TS 37.355 tels que la section 6.5.9 pour NR E-CID, pais aussi NR DL-TDOA, NR DL-AoD ou NR Multi-RTT.

Le terminal utilisateur UE et les stations de base de proximité peuvent déterminer les données de positionnement (Pos2, respectivement Pos3) à partir de mesures effectuées au niveau de la couche PHY (L1), après le traitement FFT/DFT (FFT si transformée Fourier directe rapide ou « Fast Fourier Transform » en anglais, DFT si transformée Fourier discrète ou « Discrète Fourier Transform » en anglais) en réception, et préférablement avant l'égalisation du canal radio.

## Revendications

1. Procédé de validation d'un positionnement d'un terminal utilisateur (UE) compatible 5G dans un réseau de cellules 5G, ledit terminal utilisateur (UE) étant adapté pour échanger des trames de service (T_{S}) avec un satellite (Sat), ledit satellite (Sat) étant adapté pour échanger des trames lien feeder (T_{LF}) avec une passerelle (GW), ladite passerelle (GW) étant reliée à un réseau central 5G (5GC), chaque cellule 5G du réseau de cellules 5G comprenant au moins une station de base, chaque station de base étant apte à communiquer avec le réseau central 5G (5GC), ledit terminal utilisateur (UE) étant apte à communiquer à un instant donné avec plusieurs stations de base des cellules 5G, dites stations de base de proximité (gNB1,..., gNBi, ..., gNBn), ledit procédé de validation comprenant :
- une étape de détermination de premières données de positionnement (Pos1) du terminal utilisateur (UE), lesdites premières données de positionnement (Pos1) étant une position GNSS du terminal utilisateur (UE), lesdites premières données de positionnement (Pos1) étant envoyées par le terminal utilisateur (UE) au réseau central 5G via le satellite (Sat) ;
- une étape d'envoi par le terminal utilisateur (UE) de secondes données de positionnement (Pos2) du terminal utilisateur (UE) vers le réseau central 5G, lesdites secondes données de positionnement (Pos2) étant basées sur tout ou partie des mesures de canaux réalisées par le terminal utilisateur (UE) sur les stations de base de proximité (gNB1,..., gNBi, ..., gNBn), ladite étape d'envoi étant réalisée via le satellite (Sat) ;
- une étape d'envoi par les stations de base de proximité (gNB1,..., gNBi, ..., gNBn) de troisièmes données de positionnement (Pos3) du terminal utilisateur (UE) vers le réseau central 5G, lesdites troisièmes données de positionnement étant basées sur des mesures de canaux réalisées par les stations de base de proximité (gNB1,..., gNBi, ..., gNBn) sur les émissions du terminal utilisateur (UE), ladite étape d'envoi étant réalisée sans passer par le satellite (Sat) ;
- une étape de comparaison, dans le réseau central 5G, des secondes données de positionnement (Pos2) avec les troisièmes données de positionnement (Pos3), les premières données de positionnement (Pos1) du terminal utilisateur (UE) étant validées si les secondes données de positionnement (Pos2) sont compatibles avec les troisièmes données de positionnement (Pos3).

2. Procédé de validation selon la revendication 1, dans lequel les secondes données de positionnement sont des mesures par le terminal utilisateur (UE) des canaux de propagation réalisées sur les émissions des stations de base de proximité (gNB1,..., gNBi, ..., gNBn).

3. Procédé de validation selon la revendication 1, dans lequel les secondes données de positionnement sont des clés secrètes particulières (SKGᵢ) générées par le terminal utilisateur (UE), lesdites clés secrètes particulières (SKGᵢ) étant calculées à partir de mesures des canaux de propagation réalisées par le terminal utilisateur (UE) sur les émissions des stations de base de proximité (gNB1,..., gNBi, ..., gNBn).

4. Procédé de validation selon la revendication 3, dans lequel les secondes données de positionnement sont une clé secrète globale SKG calculée à partir des clés secrètes particulières (SKGᵢ).

5. Procédé de validation selon l'une quelconque des revendications 1 à 4, dans lequel les troisièmes données de positionnement sont les mesures des canaux de propagation réalisées par les stations de base de proximité (gNB1,..., gNBi, ..., gNBn) sur les émissions du terminal utilisateur (UE).

6. Procédé de validation selon l'une quelconque des revendications 1 à 4, dans lequel les troisièmes données de positionnement sont des clés secrètes particulières SKG'ᵢ générées par les stations de base de proximité (gNB1,..., gNBi, ..., gNBn), lesdites clés secrètes étant calculées à partir de mesures des canaux de propagation réalisées par lesdites stations de proximité (gNB1,..., gNBi, ..., gNBn) sur les émissions du terminal utilisateur (UE).

7. Procédé de validation selon la revendication 6, dans lequel les troisièmes données de positionnement sont une clé secrète globale SKG' de station de base calculées à partir des clés secrètes particulières (SKG'ᵢ).

8. Procédé de validation selon les revendications 6 ou 7, dans lequel les clés secrètes (SKGᵢ, SKG'ᵢ) sont ajoutées sur des protocoles LPP/NRPPa dans leur transmission au réseau central 5G.

9. Procédé de validation selon l'une quelconque des revendications 1 à 8, dans lequel ledit procédé comprend initialement une étape d'authentification du terminal utilisateur (UE) dans le réseau central 5G.

10. Système de communication 5G comprenant :
- un réseau radio cellulaire5G, chaque cellule dudit réseau 5G comprenant au moins une station de base chaque station de base étant adaptée pour communiquer avec un terminal utilisateur (UE) compatible 5G ;
- un satellite (Sat), ledit satellite (Sat) étant adapté pour échanger des trames de service (T_{S}) avec le terminal utilisateur (UE) ;
- une passerelle (GW), ladite passerelle (GW) étant adaptée pour échanger des trames lien feeder (T_{LF}) avec le satellite (Sat) ;
- un réseau central 5G (5GC), ledit réseau central (5GC) étant relié à la passerelle (GW), ledit réseau central (5GC) étant apte à communiquer avec les stations de base ;
- ledit terminal utilisateur (UE) étant apte à communiquer à un instant donné avec plusieurs stations de base, dites stations de base de proximité (gNB1,..., gNBi, ..., gNBn) ;
ledit système de communication 5G (1) étant apte à mettre en oeuvre les étapes d'un procédé de validation d'un positionnement du terminal utilisateur (UE) dans le réseau de cellules 5G, selon l'une quelconque des revendications 1 à 9.

11. Procédé d'échange de premières données de positionnement (Pos1) et de secondes données de positionnement (Pos2) destiné à être mis en oeuvre par un terminal utilisateur (UE) compatible 5G pour une validation d'un positionnement dudit terminal utilisateur (UE) dans un réseau radio cellulaire 5G, ledit terminal utilisateur (UE) étant adapté pour échanger des trames de service (T_{S}) avec un satellite (Sat), ledit satellite (Sat) étant adapté pour échanger des trames lien feeder (T_{LF}) avec une passerelle (GW), ladite passerelle (GW) étant reliée à un réseau central 5G (5GC), chaque cellule 5G du réseau radio cellulaire 5G comprenant au moins une station de base, chaque station de base étant apte à communiquer avec le réseau central 5G (5GC), ledit terminal utilisateur (UE) étant apte à communiquer à un instant donné avec plusieurs stations de base, dites stations de base de proximité (gNB1,..., gNBi, ..., gNBn), ledit procédé d'échange de données comprenant :
- une étape de détermination des premières données de positionnement (Pos1) du terminal utilisateur (UE), lesdites premières données de positionnement (Pos1) étant une position GNSS du terminal utilisateur (UE), lesdites premières données de positionnement (Pos1) étant envoyées par le terminal utilisateur (UE) au réseau central 5G via le satellite (Sat) ;
- une étape d'envoi par le terminal utilisateur (UE) des secondes données de positionnement (Pos2) du terminal utilisateur (UE) vers le réseau central 5G, lesdites secondes données de positionnement (Pos2) étant basées sur tout ou partie de mesures de canaux réalisées par le terminal utilisateur (UE) sur les stations de base de proximité (gNB1,..., gNBi, ..., gNBn), ladite étape d'envoi étant réalisée via le satellite (Sat), lesdites secondes données de positionnement (Pos2) étant aptes à être comparées à des troisièmes données de positionnement (Pos3), lesdites troisièmes données de positionnement (Pos3) étant adaptées pour être envoyées par les stations de base de proximité (gNB1,..., gNBi, ..., gNBn) sans passer par le satellite (Sat), lesdites troisièmes données de positionnement (Pos3) étant basées sur des mesures de canaux réalisées par les stations de base de proximité (gNB1,..., gNBi, ..., gNBn) sur les émissions du terminal utilisateur (UE), les premières données de positionnement (Pos1) du terminal utilisateur (UE) étant validées si les secondes données de positionnement (Pos2) sont compatibles avec les troisièmes données de positionnement (Pos3).

12. Terminal utilisateur compatible 5G, ledit terminal utilisateur (UE) étant apte à mettre en oeuvre les étapes d'un procédé d'échange de premières données de positionnement (Pos1) et de secondes données de positionnement (Pos2) de la revendication 11 pour une validation d'un positionnement dudit terminal utilisateur (UE) dans un réseau radio cellulaire 5G.

13. Programme d'ordinateur comportant des instructions exploitables par un terminal utilisateur (UE) compatible 5G selon la revendication 12, qui lorsqu'elles sont exécutées ou interprétées par ledit terminal utilisateur (UE) déclenchent la mise en oeuvre d'un procédé d'échange de première données de positionnement (Pos1) et de secondes données de positionnement (Pos2) selon la revendication 11 pour une validation d'un positionnement dudit terminal utilisateur (UE) dans un réseau de cellules 5G.

14. Procédé d'échanges de troisièmes données de positionnement (Pos3) destiné à être mis en oeuvre par une station de base pour une validation d'une positionnement d'un terminal utilisateur (UE) compatible 5G dans un réseau radio cellulaire 5G, ladite station de base, dite station de base de proximité étant apte à communiquer à un instant donné avec ledit terminal utilisateur (UE), ledit terminal utilisateur (UE) étant adapté pour échanger des trames de service (T_{S}) avec un satellite (Sat), ledit satellite (Sat) étant adapté pour échanger des trames lien feeder (T_{LF}) avec une passerelle (GW), ladite passerelle (GW) étant reliée à un réseau central 5G (5GC), la station de base étant apte à communiquer avec ledit réseau central 5G (5GC), ledit procédé d'échange de données comprenant :
- une étape d'envoi de troisièmes données partielles de positionnement (Pos31, ..., Pos3i, ..., Pos3n) vers le réseau central 5G (5GC) sans passer par le satellite (Sat), lesdites troisièmes données de positionnement étant basées sur des mesures de canaux réalisées par la station de base de proximité sur les émissions du terminal utilisateur (UE), lesdites troisièmes données partielles de positionnement (Pos31, ..., Pos3i, ..., Pos3n) étant adaptées pour être combinées avec des troisièmes données partielles de positionnement (Pos31, ..., Pos3i, ..., Pos3n) basées sur des mesures de canaux réalisées par les stations de base de proximité (gNB1,..., gNBi, ..., gNBn) sur les émissions du terminal utilisateur (UE) à l'instant donné pour former des troisièmes données de positionnement (Pos3), lesdites troisièmes données de positionnement (Pos3) étant adaptées pour être comparées avec de secondes données de positionnement (Pos2), lesdites secondes données de positionnement ayant été envoyées par le terminal utilisateur (UE) vers le réseau central 5G via le satellite (Sat), lesdites secondes données de positionnement (Pos2) étant basées sur les mesures de canaux réalisées par le terminal utilisateur (UE) sur les stations de base de proximité (gNB1,..., gNBi, ..., gNBn), les premières données de positionnement (Pos1) du terminal utilisateur (UE) dans le réseau radio cellulaire étant validées si les secondes données de positionnement (Pos2) sont compatibles avec les troisièmes données de positionnement (Pos3), lesdites premières données de positionnement (Pos1) étant une position GNSS du terminal utilisateur (UE), lesdites premières données de positionnement (Pos1) étant envoyées par le terminal utilisateur (UE) au réseau central 5G via le satellite (Sat).

15. Station de base apte à mettre en oeuvre les étapes d'un procédé d'échanges de troisièmes données de positionnement (Pos3) selon la revendication 14 pour une validation d'un positionnement d'un terminal utilisateur (UE) dans un réseau radio cellulaire 5G.

16. Programme d'ordinateur comportant des instructions exploitables par une station de base (gNB1,..., gNBi, ..., gNBn) selon la revendication 15, qui lorsqu'elles sont exécutées ou interprétées par ladite station de base (gNB1,..., gNBi, ..., gNBn) déclenchent la mise en oeuvre d'un procédé d'échanges de troisièmes données de positionnement (Pos3) selon la revendication 14 pour une validation d'un positionnement d'un terminal utilisateur (UE) dans un réseau radio cellulaire 5G.

17. Procédé de traitement de premières données de positionnement (Pos1), de secondes données de positionnement (Pos2) et de troisième données de positionnement (Pos3) d'un terminal utilisateur (UE) compatible 5G dans un réseau radio cellulaire 5G, ledit terminal utilisateur (UE) étant adapté pour échanger des trames de service (T_{S}) avec un satellite (Sat), ledit satellite (Sat) étant adapté pour échanger des trames lien feeder (T_{LF}) avec une passerelle (GW), ladite passerelle (GW) étant reliée à un réseau central 5G (5GC), chaque cellule 5G du réseau radio cellulaire 5G comprenant une station de base, chaque station de base étant apte à communiquer avec le réseau central 5G (5GC), ledit terminal utilisateur (UE) étant apte à communiquer à un instant donné avec plusieurs stations de base des cellules 5G, dites stations de base de proximité (gNB1,..., gNBi, ..., gNBn), ledit procédé de traitement comprenant :
- une étape de réception des premières données de positionnement (Pos1) du terminal utilisateur (UE), lesdites premières données de positionnement (Pos1) étant une position GNSS du terminal utilisateur (UE), lesdites premières données de positionnement (Pos1) étant envoyées par le terminal utilisateur (UE) via le satellite (Sat) ;
- une étape de réception de secondes données de positionnement (Pos2) du terminal utilisateur (UE), lesdites secondes données de positionnement (Pos2) étant basées sur tout ou partie de mesures de canaux réalisées par le terminal utilisateur (UE) sur les stations de base de proximité (gNB1,..., gNBi, ..., gNBn), lesdites secondes données de positionnement (Pos2) étant envoyées par le terminal utilisateur (UE) via le satellite (Sat) ;
- une étape de réception de troisièmes données de positionnement (Pos3), lesdites troisièmes données de positionnement étant basées sur des mesures de canaux réalisées par les stations de base de proximité (gNB1,..., gNBi, ..., gNBn) sur les émissions du terminal utilisateur (UE), ladite étape d'envoi étant réalisée par les stations de base de proximité (gNB1,..., gNBi, ..., gNBn) sans passer par le satellite (Sat) ;
- une étape de comparaison des secondes données de positionnement (Pos2) avec les troisièmes données de positionnement (Pos3), les premières données de positionnement (Pos1) du terminal utilisateur (UE) étant validées si les secondes données de positionnement (Pos2) sont compatibles avec les troisièmes données de positionnement (Pos3).

18. Réseau d'accès (RAN) et réseau central 5G (5GC) apte à mettre en oeuvre les étapes d'un procédé de traitement de données de positionnement (Pos1, Pos2, Pos3) selon la revendication 17 pour une validation d'un positionnement d'un terminal utilisateur (UE) dans un réseau radio cellulaire 5G.

19. Programme d'ordinateur comportant des instructions de programme exploitables par un réseau d'accès (RAN) et un réseau central 5G (5GC) selon la revendication 18, qui lorsqu'elles sont exécutées ou interprétées par lesdits réseau d'accès (RAN) et réseau central 5G (5GC) déclenchent la mise en oeuvre d'un procédé de traitement de données de positionnement (Pos1, Pos2, Pos3) selon la revendication 16 pour une validation d'un positionnement d'un terminal utilisateur (UE) dans un réseau radio cellulaire 5G.
